(19) Europäisches Patentamt
European Patent Office
Office européen des brevets

(11) Publication number: 0 152 812 A2

# (12) EUROPEAN PATENT APPLICATION

(21) Application number: 85100823.5

(22) Date of filing: 27.01.85

(51) Int. Cl.⁴: A 01 N 3/02

(30) Priority: 01.02.84 AU 3420/84

(43) Date of publication of application: 28.08.85 Bulletin 85/35

(84) Designated Contracting States: BE DE FR GB NL

(71) Applicant: **UNIVERSITY OF NEW ENGLAND, Armidale New South Wales (AU)**

(72) Inventor: **Woodburn, Olive Jane, "Scarwater", Collinsville/Queensland (AU)**
Inventor: **Smith, Noel Glanvill, "Langdale" Blanch Road, Tilbuster Armidale/New South Wales (AU)**

(74) Representative: **Patentanwälte Kohler - Schwindling - Späth, Hohentwielstrasse 41, D-7000 Stuttgart 1 (DE)**

## (54) Method for preserving cut flowers.

(57) A method and a preparation for increasing the vase life of cut flowers and/or cut foliage. The method comprises either treating the cut flowers and/or cut foliage with an aqueous solution containing a soluble nickel salt or growing whole plants from which cut flowers and/or cut foliage can be obtained in a nutrient solution containing a soluble nickel salt. The preparation comprises a nickel salt in solid form or in a dilute or concentrated aqueous solution together with instructions for the use thereof in aqueous solution.

EP 0 152 812 A2

The present invention relates to a method for treating whole plants, cut flowers and/or cut foliage to increase the vase life of cut flowers and/or cut foliage.

Cut flowers are a highly perishable product and because of their visual and monetary value effort has been expanded over the years to maximise cut-flower longevity. The reason for the short vase-life of most flowers is not completely understood but can be attributed to such factors as:-

i) water stress accentuated by vascular blockage or microbial contamination,

ii) the high respiratory activity of petals,

iii) the depletion of metabolites in the flower, and

iv) the sensivity of flowers to ethylene.

The present invention relates to a novel method for the treatment of cut flowers and/or cut foliage to increase its vase life.

The present invention consists in a method for increasing the vase life of cut flowers and/or cut foliage comprising treating the cut flowers with an aqueous solution containing from 0.01 milli Molar (mM) to 100 mM of a soluble nickel salt.

In another embodiment of the invention, the method consists in growing whole plants, from which cut flowers and/or cut foliage can be obtained, in a nutrient solution containing from 0.01mM to 100mM of a soluble nickel salt.

The present invention further consists in a preparation comprising a nickel salt in solid form or in a dilute or concentrated aqueous solution together with instructions for the use thereof in aqueous solutions at a concentration of from 0.01 to 100 mM for extending the vase life of cut flowers or foliage.

The expression "vase life" means the life of the cut flowers or foliage stored with their cut stems in water or the said solution up until the flowers or foliage show visual degradation which detracts from their aesthetic appeal. The expression also covers the situation in which the flowers or foliage are treated and then removed from the treatment solution for transport or display without the benefit of having their cut stems immersed in water or an aqueous solution.

The treatment of the flowers or foliage will generally comprise immersing the cut stems thereof in the treatment solution. Other methods of application may be effective. Such methods including foliar application. The treatment may be applied by immersing the cut stem of the flowers or foliage in an aqueous solution of a nickel salt for a substantial period of the life of the cut flowers or foliage i.e. the flowers or foliage are stored in a vase containing the nickel solution. In this case the preferred concentration of the nickel salt is from 0.01 to 10 mM most preferably 0.1 to 2.5 mM.

In another embodiment of the invention the cut stems of the flowers or foliage may be immersed for a shorter period in a more concentrated solution of the nickel salt. In this case a concentration of from 2.0 to 100 mM is preferred. The treatment period may be from 1 minute to 5 hours however 5 minutes to 1 hour is most preferred.

Preferably, the treatment of the whole plants will comprise growing the plants hydroponically wherein the nutrient solution contains from 0.01mM to 100mM of a soluble nickel salt.

The treatment times and concentrations given above are typical and the optimum time and concentration may be determined by simple experimentation for any given species or variety of flower. The lower levels of nickel concentration may be less than optimum in extending vase life while the higher levels may prove toxic to the flowers or foliage resulting in premature petal or leaf drop or in discolouration thereof.

The nickel salt used is preferably nickel sulfate, however, any soluble nickel salt could be used. Suitable salts include nickel chloride, nickel nitrate, nickel ammonium sulfate and nickel acetate.

The treatment according to this invention may be applied in conjunction with any other known method for prolonging the vase life of cut flowers or foliage. While the present applicants are not bound by this explanation it is believed that the nickel salts may work by inhibiting ethylene production in the flowers or foliage. These salts might also have an anti-blockage effect preventing vascular blockage by microbial growth. If the above theories are correct other treatments such as the provision of metabolites and the treatment of flowers or foliage to prevent water stress may be used in conjunction with the present treatment to good effect.

Hereinafter given by way of example only is a preferred embodiment of the present invention.

Experiment 1

Materials and Method:

C. frutescens blooms were held in solutions of 0, 0.5, 1.0, 1.5, 2.0, 2.5 mM nickel sulphate prepared from 0.1M stock solution ($NiSO_4.6H_2O$). Flowers were evaluated as previously described.

Results:

All treatments of nickel sulphate significantly increased the vase-life of C. frutescens. (See Table 1). At the optimum concentration, 1.5 mM, vase-life was enhanced more than twice and could be separated from the other treatments at 5% level of the Studentized Range Test. No toxic symptoms developed and the stems and foliage remained a healthy green throughout the experiment. The flowers maintained their white appearance until wilting of the petals terminated vase life.

TABLE 1

The Mean Vase life of *C. frutescens* Flowers in Treatments of Nickel Sulphate ($NiSO_4.6H_2O$)

| Treatment (mM) | 0.5 | 1.0 | 1.5 | 2.0 | 2.5 | CONTROL DISTILLED WATER |
|---|---|---|---|---|---|---|
| MEAN VASE LIFE (Days) | 11.1bc | 14.9ab | 16.7a* | 11.1bc | 12.1b | 7.4c |

*Means with the same letter are not significantly different at 5% level of Studentized Range Test.

Discussion:

The mean vase life of the flowers at 1.5mM was 16.7 days while the control was only 7.4 days. This enhancement of flower life could be a result of the ethylene inhibiting properties of nickel. Lau and Yang (1978) found that nickel decreased the conversion of methionine to ethylene in apple tissue and bean hypocotyl tissue.

Nickel at the concentrations used did not produce any pigmentation in the stem or leaves, or toxicity symptoms in the flower head. Further research is needed to determine the real mechanism by which nickel is acting in the flower. On the present results nickel ($Ni^{2+}$) appears very promising as a floral preservative with chrysanthemums.

Experiment 2

Materials and Method:

The *C. frutescens* flowers were obtained and prepared as described previously, all flowers being sorted for uniformity and randomized between the treatments. Thirteen treatments were assessed with eight flowers in each solution.

Cobalt ($Co^{2+}$) was tested at 1mM and 2mM, nickel sulphate at 1.25mM, 1.50mM and 1.75mM. The commercial preservative, 'Chrysal' was tried at the recommended level; at half strength, and at one and a half times the standard concentration. Other solutions that were tested were Ethanol at 5%, by volume, and 8-hydroxyquinoline at 225, 250, 275 ppm, in combination with 150ppm citric acid and 10% sucrose. Distilled water was used as a control.

Results:

There is a strong suggestion of differences between the treatments (see Table 2). Only the nickel sulphate, ethanol and chrysal solutions were significantly better than the control but they cannot be separated from each other at the 5% level of the Studentized Range Text. However, obvious differences arose between these groups during the experiment,

TABLE 2

The Mean Vase Life of *C.frutescens* Blooms in Potential Floral Preservative Solutions

| TREATMENTS | | | | | | | | | | | | |
|---|---|---|---|---|---|---|---|---|---|---|---|---|
| $Co^{2+}$ | $Co^{2+}$ | $Ni^{2+}$ | $Ni^{2+}$ | $Ni^{2+}$ | Chrysal | Chrysal | Chrysal | HQ | HQ | HQ | Ethanol | CONTROL DISTILLED WATER |
| 1mM | 2mM | 1.25mM | 1.50mM | 1.75mM | 1/2rec. | rec. | 1 1/2rec | 225 ppm | 250 ppm | 275 ppm | 5%v/v | |
| MEAN VASE LIFE | | | | | | | | | | | | |
| 7.625 | 6.000 | 12.875 | 11.625 | 11.625 | 10.625 | 12.500 | 11.875 | 3.500 | 3.750 | 3.500 | 12.875 | 5.375 |
| bc | cd | a* | a | a | ab | a | a | d | d | d | a | cd |

* means with the same letter are not significantly different at the 5% level of the Studentized Range Test

NOTE: - HQ is a solution of 8-hydroxyquinoline (ppm) plus 150 ppm Citric Acid and 10% sucrose
- Chrysal is a commercial preservative. This was tested at the recommended rate and at 1/2 and 1 1/2 times the recommended level

6

concerning the condition of the foliage, on which there was no scoring. The commercial preservative treatments all promoted the yellowing of the leaves while the ethanol solution killed the foliage prior to any flower wilting. Only nickel ($Ni^{2+}$) treatments maintained a healthy green appearance in the plants.

All hydroxyquinoline solutions exhibited detrimental effects on the flowers. Vase life was not significantly different from the control.

The claims defining the invention are as follows:

1. A method for increasing the vase life of cut flowers and/or cut foliage comprising treating the cut flowers or growing whole plants from which cut flowers and/or cut foliage can be obtained with an aqueous solution containg from 0.01mM to 100mM of a soluble nickel salt.

2. A method as claimed in claim 1 in which the treatment comprises immersing the stems of the cut flowers and/or cut foliage in the aqueous solution.

3. A method as claimed in claim 2 in which the concentration of the soluble nickel salt is from 0.01mM to 10mM.

4. A method as claimed in claim 3 in which the concentration of the soluble nickel salt is from 0.1mM to 2.5mM.

5. A method as claimed in claim 2 in which the stems are immersed in the aqueous solution for a period of from 1 minute to 5 hours.

6. A method as claimed in claim 5 in which the stems are immersed in the aqueous solution for a period of from 5 minutes to 1 hour.

7. A method as claimed in claim 5 or claim 6 in which the concentration of the soluble nickel salt is from 20mM to 100mM.

8. A preparation for increasing the vase life of cut flowers and/or cut foliage said preparation comprising a soluble nickel salt in solid form or in an aqueous solution together with instructions for the use thereof in aqueous solution at a concentration of from 0.01mM to 100mM.

9 A method as claimed in any one of claims 1 to 8 or a preparation as claimed in claim 9 wherein the soluble nickel salt is nickel sulfate.

10. A method or a preparation for increasing the vase life of cut flowers and/or cut foliage substantially as hereinbefore described.